# EUROPÄISCHE PATENTSCHRIFT

(11) **EP 2 500 122 B1**
(45) Veröffentlichungstag und Bekanntmachung des Hinweises auf die Patenterteilung: **24.04.2019**
(21) Anmeldenummer: 12001116.8
(22) Anmeldetag: 20.02.2012
(51) Int. Cl.: B23B 5/16, B23B 51/10

(54) **Rohrentgrater, insbesondere für Rohre von Pressfitting-Systemen, sowie Entgrareinrichtung mit einem solchen Rohrengrater**
Pipe deburrer, in particular for pipes of press fitting systems, and deburring device with such a pipe deburrer
Ebavurage de tuyau, notamment pour tuyaux de systèmes press-fit, ainsi que dispositif d'ébavurage doté d'un tel ébavurage de tuyaux

(30) Priorität: 14.03.2011 DE 102011014791
(43) Veröffentlichungstag der Anmeldung: 19.09.2012
(73) Patentinhaber: REMS GmbH & Co KG, 71332 Waiblingen (DE)
(72) Erfinder: Weiß, Hermann, 71686 Remseck (DE)
(74) Vertreter: Jackisch-Kohl, Anna-Katharina

(56) Entgegenhaltungen:
- EP-A1- 2 058 067
- JP-A- 60 006 307
- JP-A- 2008 062 313
- US-A- 1 758 521
- US-A- 3 232 145
- US-A- 4 229 129
- US-A- 4 678 380

## Beschreibung

Die Erfindung betrifft einen Rohrentgrater, insbesondere für Rohre von Pressfitting-Systemen, nach dem Oberbegriff des Anspruches 1 sowie eine Entgrateinrichtung mit einem solchen Rohrentgrater nach dem Oberbegriff des Anspruches Eine solche Entgrateinrichtung ist aus JP 2008 062 313 A bekannt.

Bei der Rohrverlegung werden Rohre aus Stahl, nichtrostendem Stahl, Kupfer und Kunststoff verwendet. Die Rohre werden üblicherweise auf der Baustelle auf Maß abgelängt. Zum Trennen der Rohre werden Handwerkzeuge, zum Beispiel Rohrabschneider, Sägen oder elektrische Maschinen eingesetzt. Beim Trennen entsteht je nach Trennverfahren am Rohr ein Außen- und/oder ein Innengrat, der nach dem Trennvorgang fachgerecht entfernt werden muss. Hierfür werden manuelle und maschinelle Entgrateinrichtungen eingesetzt.

Insbesondere Rohre aus nichtrostendem Stahl, Kupfer und Kunststoff für die Verlegung von Pressfitting-Systemen werden vorteilhafterweise mit Werkzeugen mit einem Schneidrad getrennt. Dabei entsteht nur ein minimaler Außengrat. Durch das spanlose Trennverfahren mit dem Schneidrad entsteht jedoch, abhängig vom Vorschubdruck, ein mehr oder weniger starker Innengrat. Bis zu einem Rohrdurchmesser von etwa 54 mm werden mehrzahnige Rohrentgrater eingesetzt, die von Hand, gegebenenfalls durch einen Bohrschrauber angetrieben, gegen das abgetrennte Rohr gedrückt werden (EP 2 058 067 A1). Dabei wird das zu entgratende Rohrstück in der Regel mit der Hand gehalten. Der Rohrentgrater hat ein zylindrisches Gehäuse, das außenseitig mit Riffelungen versehen ist. Das zylindrische Gehäuse umgibt einen Innen- und einen Außenentgrater, die einen gemeinsamen Kegel haben. In der Achse des Innen- und Außenentgraters befindet Technik jedoch nicht möglich, da weder die Rohrstücke noch ein entsprechend schwerer, großer und damit unhandlicher Rohrentgrater jeweils mit einer Hand gehalten werden können.

Bei Gewindeschneidmaschinen ist es üblich, zum Rohrentgraten eine Entgraterklinge einzusetzen, die in das eingespannte und drehbar angetriebene Rohr gedrückt wird und den Innengrat entfernt. Für Rohre von Pressfitting-Systemen sind Gewindeschneidmaschinen jedoch ungeeignet und unwirtschaftlich, da für die Verlegung der Rohre der Pressfitting-Systeme keine Gewinde geschnitten werden dürfen und sie nur zum Trennen und Entgraten der Rohre für Pressfitting-Systeme zu voluminös, zu schwer und zu teuer sind.

Der Erfindung liegt darum die Aufgabe zugrunde, den gattungsgemäßen Rohrentgrater und die gattungsgemäße Entgrateinrichtung so auszubilden, dass die Rohre, insbesondere von Pressfitting-Systemen, einfach und kostengünstig auch bei großem Rohrdurchmesser entgratet werden können.

Diese Aufgabe wird beim gattungsgemäßen Rohrentgrater erfindungsgemäß mit den kennzeichnenden Merkmalen des Anspruches 1 und bei der gattungsgemäßen Entgrateinrichtung erfindungsgemäß mit den kennzeichnenden Merkmalen des Anspruches 6 gelöst.

Der erfindungsgemäße Rohrentgrater hat ein Gehäuse, das an seiner zylindrischen Außenseite mit wenigstens einem umlaufenden Reibelement versehen ist. Mit dessen Hilfe ist es möglich, den Rohrentgrater um seine Achse drehbar anzutreiben, so dass das zu entgratende Rohr, auch wenn es einen großen Durchmesser haben sollte, von Hand gehalten werden kann. Am umlaufend am Gehäuse vorgesehenen Reibelement kann ein Reibrad angreifen, das den Rohrentgrater in Drehung versetzt. Das zu entgratende Rohr muss hierbei nicht um seine Achse gedreht werden, so dass der Entgratvorgang problemlos durchgeführt werden kann.

Vorteilhaft ist das Reibelement ein am Gehäuse des Rohrentgraters befestigter Reibkranz. Er kann zumindest an seiner Oberseite mit einem entsprechenden Reibbelag versehen sein oder auch vollständig aus einem entsprechenden Reibmaterial gefertigt sein.

Bei einer bevorzugten Ausführungsform ist das Reibelement mit einer umlaufenden Vertiefung versehen.

Als Entgratteil wird vorteilhaft eine Entgraterklinge eingesetzt, die mit wenigstens einem Klingenteil entweder nach außen über das Gehäuse und/ oder nach innen über die Innenwand des Gehäuses ragt. Mit dem nach außen ragenden Klingenteil kann eine Innenentgratung vorgenommen werden, während mit dem über die Innenseite des Gehäuses vorstehenden Klingenteil das Rohr außenseitig entgratet werden kann. Die Entgraterklinge ist ein einfach und kostengünstig herzustellendes Bauteil, das sich problemlos im Gehäuse einbauen lässt.

Vorteilhaft wird das Entgratteil durch wenigstens ein Sicherungselement im Gehäuse befestigt. Hierbei ist das Sicherungselement so vorgesehen, dass es das Entgratteil in seine Einbaulage innerhalb des Gehäuses drückt. Dadurch wird eine Art Vorspannung erreicht, durch die erreicht wird, dass das Entgratteil keine Relativbewegungen zum Gehäuse beim Entgratvorgang ausführen kann.

Bei der erfindungsgemäßen Entgrateinrichtung ist die Rollenauflage vorgesehen, die wenigstens zwei mit Abstand nebeneinander liegende, frei drehbare Rollen aufweist. Sie bilden die Auflage für den Rohrentgrater, der auf den parallel zueinander liegenden frei drehbaren Rollen aufgelegt wird. Die Entgrateinrichtung ist mit einem drehbar angetriebenen Reibrad versehen, das zum Drehantrieb des Rohrentgraters in Reibeingriff mit dem Reibelement des Rohrentgraters gebracht wird. Das Reibrad liegt mit seiner Mantelfläche an der Mantelfläche des Reibelementes an. Da das Reibrad drehbar angetrieben wird, wird durch den Reibeingriff der Rohrentgrater auf den Rollen aufliegend um seine Achse drehbar angetrieben. Zum Drehantrieb des Rohrentgraters ist somit kein eigener Antrieb notwendig, so dass die Entgrateinrichtung einen kompakten Aufbau hat und dennoch zuverlässig beim Rohrentgraten arbeitet. Das zu entgratende Rohr kann, selbst bei großem Durchmesser, von Hand gehalten und gegen den drehenden Rohrentgrater gedrückt werden.

Damit der Reibdruck zwischen dem Reibrad und dem Reibelement an die jeweiligen Verhältnisse angepasst werden kann, lässt sich das Reibrad vorteilhaft quer zu seiner Drehachse verstellen. Auf diese Weise kann der Anpressdruck des Reibrades am Reibelement eingestellt werden.

Damit eine sichere Führung bei der Verstellung möglich ist, wird das Reibrad längs eines Ständers verstellt.

Bei einer vorteilhaften Ausführungsform ist im Ständer eine Gewindespindel untergebracht. Sie ist parallel zu einer Geradführung im Ständer für die Verstellung des Reibrades vorgesehen. Auf der Gewindespindel sitzt eine Spindelmutter, die mit einem Motor/Getriebegehäuse verbunden ist. Je nach Drehrichtung der Gewindespindel wird das Motor/Getriebegehäuse über die Spindelmutter nach oben oder nach unten verstellt. Die Gewindespindel erlaubt hierbei eine stufenlose Verstellung des Motor/Getriebegehäuses.

Im Motor/Getriebegehäuse ist ein Motor/Getriebe für das Reibrad vorgesehen, das somit durch Verstellen des Motor/Getriebegehäuses in die jeweilige Position verstellt wird.

Bei einer besonders vorteilhaften Ausführungsform ist das Reibrad ein Schneidrad zum Durchtrennen des Rohres. In diesem Falle kann mit der Entgrateinrichtung auch ein Trennvorgang am Rohr durchgeführt werden. Es wird auf den frei drehbaren Rollen aufgelegt. Das Schneidrad wird gegen das zu trennende Rohr bewegt. Da das Schneidrad drehbar angetrieben wird, wird auch das auf den frei drehbaren Rollen liegende Rohr in Drehung sich ein Schaft, mit dem der Rohrentgrater mit dem Bohrschrauber verbunden werden kann. Bei Rohren mit größerem Durchmesser bis etwa 108 mm ist diese Technik jedoch nicht möglich, da weder die Rohrstücke noch ein entsprechend schwerer, großer und damit unhandlicher Rohrentgrater jeweils mit einer Hand gehalten werden können.

Bei Gewindeschneidmaschinen ist es üblich, zum Rohrentgraten eine Entgraterklinge einzusetzen, die in das eingespannte und drehbar angetriebene Rohr gedrückt wird und den Innengrat entfernt. Für Rohre von Pressfitting-Systemen sind Gewindeschneidmaschinen jedoch ungeeignet und unwirtschaftlich, da für die Verlegung der Rohre der Pressfitting-Systeme keine Gewinde geschnitten werden dürfen und sie nur zum Trennen und Entgraten der Rohre für Pressfitting-Systeme zu voluminös, zu schwer und zu teuer sind.

Der Erfindung liegt darum die Aufgabe zugrunde, den gattungsgemäßen Rohrentgrater und die gattungsgemäße Entgrateinrichtung so auszubilden, dass die Rohre, insbesondere von Pressfitting-Systemen, einfach und kostengünstig auch bei großem Rohrdurchmesser entgratet werden können.

Diese Aufgabe wird beim gattungsgemäßen Rohrentgrater erfindungsgemäß mit den kennzeichnenden Merkmalen des Anspruches 1 und bei der gattungsgemäßen Entgrateinrichtung erfindungsgemäß mit den kennzeichnenden Merkmalen des Anspruches 4 gelöst.

Der erfindungsgemäße Rohrentgrater hat ein Gehäuse, das an seiner zylindrischen Außenseite mit wenigstens einem umlaufenden Reibelement versehen ist. Mit dessen Hilfe ist es möglich, den Rohrentgrater um seine Achse drehbar anzutreiben, so dass das zu entgratende Rohr, auch wenn es einen großen Durchmesser haben sollte, von Hand gehalten werden kann. Am umlaufend am Gehäuse vorgesehenen Reibelement kann ein Reibrad angreifen, das den Rohrentgrater in Drehung versetzt. Das zu entgratende Rohr muss hierbei nicht um seine Achse gedreht werden, so dass der Entgratvorgang problemlos durchgeführt werden kann.

Das Reibelement ist ein am Gehäuse des Rohrentgraters befestigter Reibkranz. Er kann zumindest an seiner Oberseite mit einem entsprechenden Reibbelag versehen sein oder auch vollständig aus einem entsprechenden Reibmaterial gefertigt sein und steht radial nach innen über die Innenseite des die zylindrische Außenseite aufweisenden Zylinderteiles vor. In diesem Bereich ist das Reibelement mit einer umlaufenden Vertiefung versehen.

Als Entgratteil wird vorteilhaft eine Entgraterklinge eingesetzt, die mit wenigstens einem Klingenteil entweder nach außen über das Gehäuse und/ oder nach innen über die Innenwand des Gehäuses ragt. Mit dem nach außen ragenden Klingenteil kann eine Innenentgratung vorgenommen werden, während mit dem über die Innenseite des Gehäuses vorstehenden Klingenteil das Rohr außenseitig entgratet werden kann. Die Entgraterklinge ist ein einfach und kostengünstig herzustellendes Bauteil, das sich problemlos im Gehäuse einbauen lässt.

Vorteilhaft wird das Entgratteil durch wenigstens ein Sicherungselement im Gehäuse befestigt. Hierbei ist das Sicherungselement so vorgesehen, dass es das Entgratteil in seine Einbaulage innerhalb des Gehäuses drückt. Dadurch wird eine Art Vorspannung erreicht, durch die erreicht wird, dass das Entgratteil keine Relativbewegungen zum Gehäuse beim Entgratvorgang ausführen kann.

Bei der erfindungsgemäßen Entgrateinrichtung ist die Rollenauflage vorgesehen, die wenigstens zwei mit Abstand nebeneinander liegende, frei drehbare Rollen aufweist. Sie bilden die Auflage für den Rohrentgrater, der auf den parallel zueinander liegenden frei drehbaren Rollen aufgelegt wird. Die Entgrateinrichtung ist mit einem drehbar angetriebenen Reibrad versehen, das zum Drehantrieb des Rohrentgraters in Reibeingriff mit dem Reibelement des Rohrentgraters gebracht wird. Das Reibrad liegt mit seiner Mantelfläche an der Mantelfläche des Reibelementes an. Da das Reibrad drehbar angetrieben wird, wird durch den Reibeingriff der Rohrentgrater auf den Rollen aufliegend um seine Achse drehbar angetrieben. Zum Drehantrieb des Rohrentgraters ist somit kein eigener Antrieb notwendig, so dass die Entgrateinrichtung einen kompakten Aufbau hat und dennoch zuverlässig beim Rohrentgraten arbeitet. Das zu entgratende Rohr kann, selbst bei großem Durchmesser, von Hand gehalten und gegen den drehenden Rohrentgrater gedrückt werden.

Damit der Reibdruck zwischen dem Reibrad und dem Reibelement an die jeweiligen Verhältnisse angepasst werden kann, lässt sich das Reibrad vorteilhaft quer zu seiner Drehachse verstellen. Auf diese Weise kann der Anpressdruck des Reibrades am Reibelement eingestellt werden.

Damit eine sichere Führung bei der Verstellung möglich ist, wird das Reibrad längs eines Ständers verstellt.

Bei einer vorteilhaften Ausführungsform ist im Ständer eine Gewindespindel untergebracht. Sie ist parallel zu einer Geradführung im Ständer für die Verstellung des Reibrades vorgesehen. Auf der Gewindespindel sitzt eine Spindelmutter, die mit einem Motor/Getriebegehäuse verbunden ist. Je nach Drehrichtung der Gewindespindel wird das Motor/Getriebegehäuse über die Spindelmutter nach oben oder nach unten verstellt. Die Gewindespindel erlaubt hierbei eine stufenlose Verstellung des Motor/Getriebegehäuses.

Im Motor/Getriebegehäuse ist ein Motor/Getriebe für das Reibrad vorgesehen, das somit durch Verstellen des Motor/Getriebegehäuses in die jeweilige Position verstellt wird.

Bei einer besonders vorteilhaften Ausführungsform ist das Reibrad ein Schneidrad zum Durchtrennen des Rohres. In diesem Falle kann mit der Entgrateinrichtung auch ein Trennvorgang am Rohr durchgeführt werden. Es wird auf den frei drehbaren Rollen aufgelegt. Das Schneidrad wird gegen das zu trennende Rohr bewegt. Da das Schneidrad drehbar angetrieben wird, wird auch das auf den frei drehbaren Rollen liegende Rohr in Drehung um seine Achse versetzt, sobald das Schneidrad am Rohr angreift. Auf diese Weise wird das Rohr um seine Achse gedreht und mit Hilfe des drehbar angetriebenen Schneidrades durchtrennt.

Dieses Schneidrad wird als Reibrad beim Entgratvorgang eingesetzt. Damit das Schneidrad mit seiner Umfangsschneide hierbei das Reibelement des Rohrentgraters nicht beschädigt oder gar zerstört, greift die Umfangsschneide in die umlaufende Vertiefung des Reibelementes des Rohrentgraters ein. Die Vertiefung ist so ausgebildet, dass die Umfangsschneide nicht in Berührung mit dem Boden der Vertiefung kommt. Dadurch kann die zylindrische Mantelfläche im Bereich neben der Umfangsschneide des Schneidrades für den Reibeingriff mit dem Reibelement herangezogen werden, um den auf den Rollen aufliegenden Rohrentgrater für den Entgratvorgang um seine Achse zu drehen.

Vorteilhaft haben der Rohrentgrater und das Reibrad zueinander parallele Drehachsen. Dadurch ist eine einfache Drehung des Rohrentgraters durch den Reibeingriff mit dem Reibrad gewährleistet.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Vorderansicht eine erfindungsgemäße Entgratvorrichtung,
- Fig. 2: die Entgratvorrichtung gemäß Fig. 1 in Seitenansicht,
- Fig. 3: die Einzelheit X in Fig. 1 in vergrößerter Darstellung,
aus Fig. 1 hervorgeht, liegt das Entgratergehäuse 1 mit seinem zylindrischen Teil 2 auf den beiden äußeren Rollen 26, 29 auf.

Die parallel zueinander liegenden Rollen 26 bis 29 sind beispielhaft so angeordnet, dass die beiden äußeren Rollen 26, 29 auf gleicher Höhe liegen, während die inneren Rollen 27, 28 tiefer liegen, jedoch untereinander ebenfalls auf gleicher Höhe angeordnet sind.

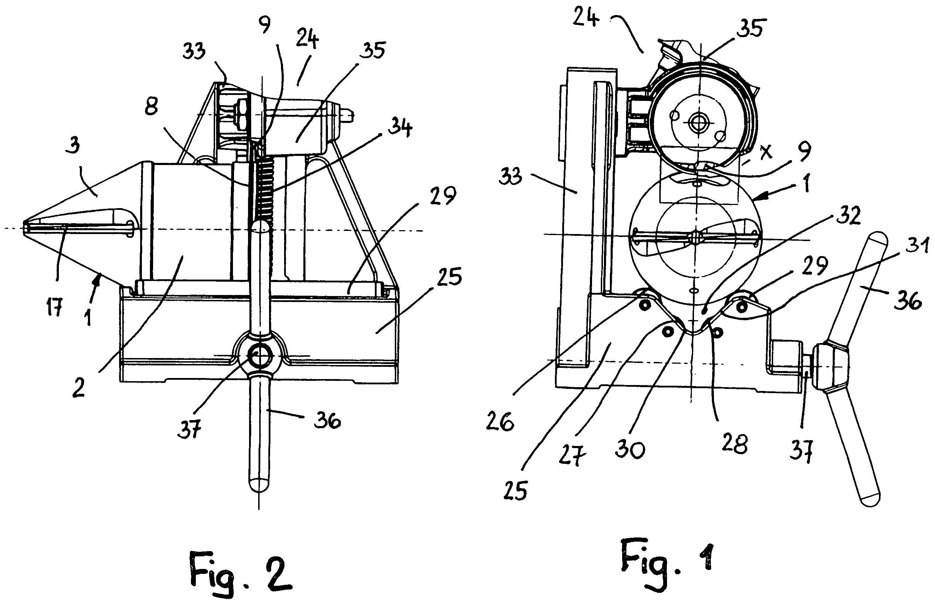

An einer Seite des Bettes 25 ist ein vertikaler Ständer 33 vorgesehen, in dem eine um ihre Achse drehbare vertikale Gewindespindel 34 (Fig. 2) drehbar gelagert ist. Auf ihr sitzt eine (nicht dargestellte) Spindelmutter, die durch Drehen der Gewindespindel 34 nach oben und nach unten bewegt werden kann. Die Gewindemutter ist mit einem Motor/Getriebegehäuse 35 verbunden, in dem ein Getriebe sowie ein Antrieb, vorzugsweise ein Elektromotor, untergebracht sind, um das Schneidrad 9 um seine Achse drehbar anzutreiben.

Um die Gewindespindel 34 zu drehen ist an der dem Ständer 33 gegenüberliegenden Seite des Bettes 25 ein Hebel 36 vorgesehen, der drehfest auf einer Welle 37 sitzt. Sie durchsetzt das Bett 25 nahe seiner Auflageseite senkrecht zu den Rollen 26 bis 29. Über ein Kegelgetriebe ist die Welle 37 mit der Gewindespindel 34 antriebsverbunden. Durch Drehen des Hebels 36 und damit der Welle 37 kann somit die Gewindespindel 34 gedreht werden, um das Schneidrad 9 mit dem Motor/Getriebegehäuse 35 nach oben oder nach unten zu verstellen.

Mit dem Schneidrad 9 ist es möglich, ein auf den Rollen 26 bis 29 frei aufliegendes Rohr zu durchtrennen, indem das drehende Schneidrad 9 mittels des Hebels 36 gegen das durchzutrennende Rohr verstellt wird. Das angetriebene Schneidrad 9 kommt in Berührung mit dem Rohr, das durch das Schneidrad 9 um seine Achse drehend angetrieben wird. Die Rollen, auf denen das Werkstück jeweils aufliegt, werden durch das drehende Rohr ebenfalls um ihre zueinander parallelen Achsen gedreht. Auf diese Weise wird das Rohr vollständig durchtrennt. Anschließend wird durch entsprechendes Drehen des Hebels 36 das Motor/Getriebegehäuse 35 mit dem Schneidrad 9 nach oben bewegt, bis das Schneidrad 9 oberhalb des durchgetrennten Rohres liegt.

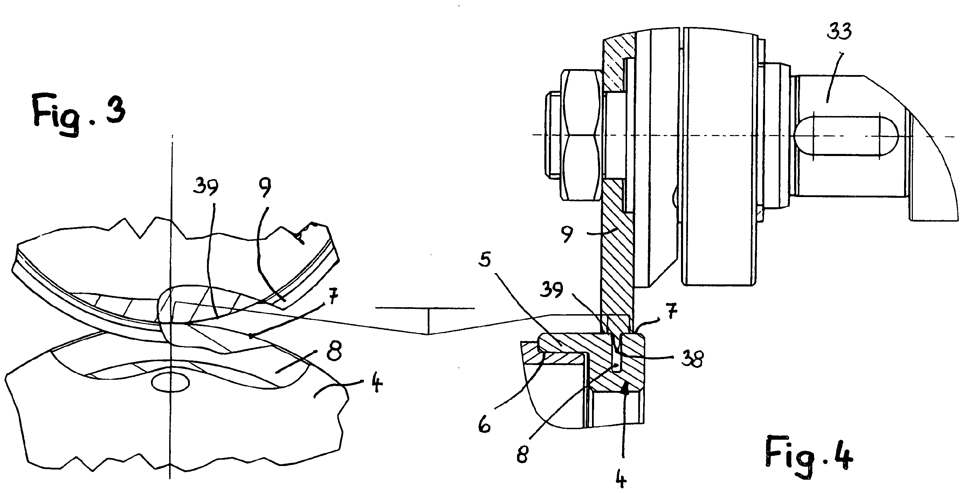

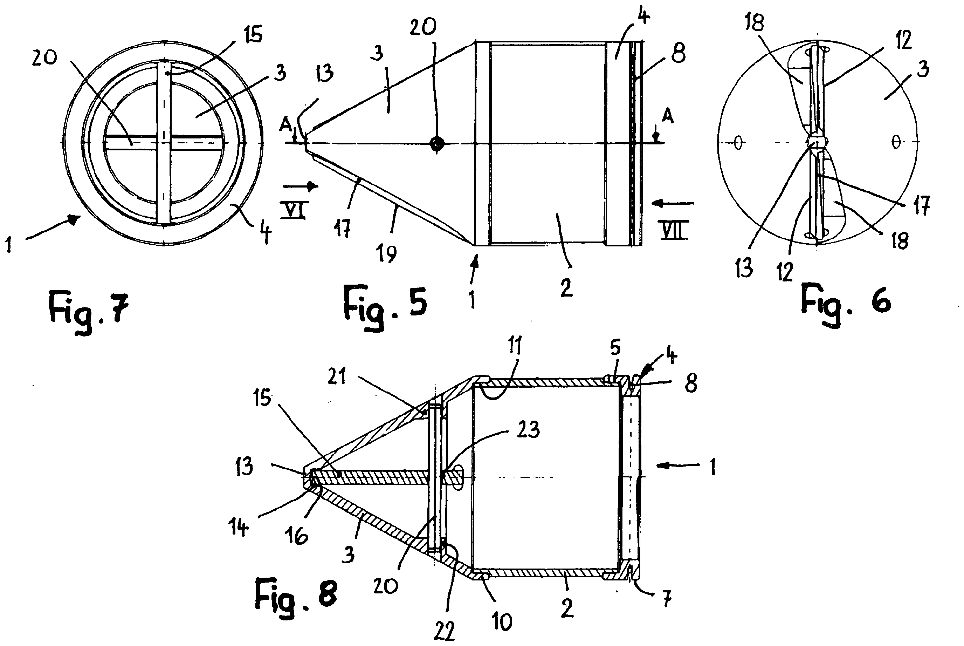

Nach diesem Trennvorgang ist das Rohr am durchgetrennten Ende innenseitig mit einem ausgeprägten Grat versehen, der nunmehr entfernt wird. Der Rohrentgrater 1 wird auf die entsprechenden Auflagerollen gelegt. Das Schneidrad 9 wird mit Hilfe des Hebels 36 wieder nach unten bewegt, wobei das Schneidrad 9 in die rillenförmige Vertiefung 8 des Entgratergehäuses 1 eingreift (Fig. 4). Die Vertiefung 8 ist so tief und so breit, dass die Umfangsschneide 38 des Schneidrades 9 nicht beschädigt wird, sondern Abstand sowohl von den Seitenwänden als auch vom Boden der Vertiefung 8 hat. Das Schneidrad 9 ist mit einer zylindrischen Mantelfläche 39 versehen, die beim Verstellen des Motor/Getriebegehäuses 35 im Bereich der rillenförmigen Vertiefung 8 zur Anlage an der Außenseite 7 des Reibkranzes 4 gelangt. Mit Hilfe des Hebels 36 kann sehr einfach die Kraft eingestellt werden, mit der die Mantelfläche 39 an der Außenfläche 7 des Reibkranzes 4 des Entgratergehäuses 1 anliegt. Das Entgratergehäuse 1 wird auf diese Weise durch Reibschluss um seine Achse drehbar angetrieben. Die Auflagerollen 26, 29, auf denen das Entgratergehäuse 1 mit seinem zylindrischen Teil 2 aufliegt, sind frei drehbar und gewährleisten außerdem eine einwandfreie Lagesicherung des Entgratergehäuses 1 in Radialrichtung.

Ist das abgetrennte Rohrstück kurz, kann es auch bei großem Durchmesser von Hand noch getragen und gegen den sich drehenden Rohrentgrater gedrückt werden. Die drehende Entgraterklinge 15 entfernt mit der Schneide 19 den innenseitigen Grat des Rohrstückes. Hat das Rohr größere Länge und kann nicht mehr von Hand getragen werden, wird es beispielsweise auf einem höhenverstellbaren Lagerblock abgelegt und von Hand gegen den sich drehenden Rohrentgrater gedrückt. Der Konusteil 3 mit dem Klingenteil 17 steht ausreichend weit über das Bett 25 vor, so dass der Innenentgratvorgang problemlos durchgeführt werden kann.

Aufgrund der beschriebenen Ausbildung des Rohrentgraters kann zum Antrieb sowohl des durchzutrennenden Rohres als auch des Rohrentgraters ein und derselbe Antrieb 24 eingesetzt werden. Dadurch gestalten sich der Trennvorgang sowie der anschließende Entgratvorgang sehr einfach und zeitsparend. Der Rohrentgrater muss lediglich auf die Auflagerollen aufgelegt werden. Der Drehantrieb erfolgt durch das Schneidrad 9 in der beschriebenen Weise, so dass eine zusätzliche Antriebseinheit zum Drehen des Rohrentgraters 1 nicht erforderlich ist.

Im beschriebenen und dargestellten Ausführungsbeispiel ist der Rohrentgrater ein Innenrohrentgrater. In gleicher Weise ist es möglich, den Rohrentgrater auch als Außenrohrentgrater auszubilden. In diesem Falle wird der zylindrische Teil 2 des Entgratergehäuses 1 verlängert und anstelle des Konusteiles 3 an der Innenseite dieses verlängerten zylindrischen Gehäuseteiles 2 ein Innenkonus ausgebildet. Er verjüngt sich in Richtung auf den zylindrischen Teil 2 und ist innenseitig mit wenigstens einem Innenentgratteil versehen, dessen Entgratschneide auf dem Mantel eines gedachten Konus liegt, der sich in Richtung auf den zylindrischen Teil 2 verjüngt. Der Antrieb eines solchen Außenentgraters erfolgt in gleicher Weise wie beim beschriebenen Innenentgrater. Das Rohr wird in diesem Falle in den verlängerten zylindrischen Teil 2 eingesetzt, wobei die auf dem Konusmantel liegende Entgraterschneide den Außengrat am Rohr entfernt.

Der Antrieb 24 ist leicht transportierbar und kann somit vom Installateur direkt auf der Baustelle einfach eingesetzt werden. Dabei ist der Antrieb 24 kompakt ausgebildet und erlaubt nicht nur das Durchtrennen von Rohren, sondern auch das Entgraten. Mit der beschriebenen Entgratvorrichtung lassen sich insbesondere Rohre mit großem Durchmesser problemlos entgraten, ohne dass hierzu schwere, baulich große und damit unhandliche Rohrentgrater eingesetzt werden müssen. Bevorzugt wird die Entgratvorrichtung für Rohre von Pressfitting-Systemen eingesetzt, kann aber selbstverständlich auch für andere Rohre verwendet werden.

Anstelle des Schneidrades 3 kann auch ein übliches Reibrad eingesetzt werden, das mit seiner zylindrischen Mantelfläche an der Außenseite 7 des Reibkranzes 4 unter Druck anliegt. Das drehbar angetriebene Reibrad versetzt infolge des Reibschlusses den Rohrentgrater in Drehung um seine Längsachse. Der Reibkranz 4 muss in diesem Falle keine rillenförmige Vertiefung 8 aufweisen, da das Reibrad nicht mit einer Umfangsschneide wie ein Schneidrad versehen ist. Aber auch wenn der Reibkranz 4 mit der rillenförmigen Vertiefung 8 versehen ist, kann der Rohrentgrater mit Hilfe eines solchen Reibrades ebenfalls zuverlässig in Drehung versetzt werden. Das Reibrad besteht zumindest an seiner zylindrischen Mantelfläche aus einem entsprechenden Reibmaterial, das den hohen Reibschluss mit dem Reibkranz 4 gewährleistet. Der Anpressdruck des Reibrades auf den Reibkranz 4 kann wiederum mit Hilfe des Hebels 36 optimal eingestellt werden, so dass der Rohrentgrater zuverlässig drehbar angetrieben wird. Aufgrund der Höhenverstellbarkeit des Motor/Getriebegehäuses 35 lässt sich das Schneidrad 9 bzw. das Reibrad rasch und einfach auf den Außendurchmesser des Reibkranzes 4 einstellen. Auf den Rollen 26 bis 29 können im Durchmesser unterschiedliche Rohrentgrater aufgelegt werden, je nach Durchmesser des zu entgratenden Rohres.

## Patentansprüche

1. Rohrentgrater, insbesondere für Rohre von Pressfitting-Systemen, mit einem Gehäuse (1), das über wenigstens einen Teil seiner Länge eine zylindrische, mit wenigstens einem umlaufenden Reibelement (4) versehene Außenseite (7) hat und das mit wenigstens einem Entgratteil (15) versehen ist,
**dadurch gekennzeichnet, dass** das Reibelement (4) ein am Gehäuse (1) befestigter Reibkranz ist, der radial nach innen über die Innenseite des die zylindrische Außenseite (7) aufweisenden Zylinderteiles (2) ragt, und dass das Reibelement (4) mit einer umlaufenden rillenförmigen Vertiefung (8) versehen ist, die sich in dem radial nach innen ragenden Reibkranz befindet.

2. Rohrentgrater nach Anspruch 1,
**dadurch gekennzeichnet, dass** das Entgratteil (15) eine Entgraterklinge ist, die mit wenigstens einem Klingenteil (17) nach außen über das Gehäuse (1) und/oder nach innen über die Innenseite des Gehäuses (1) ragt.

3. Rohrentgrater nach Ansprüche 1 oder 2,
**dadurch gekennzeichnet, dass** das Entgratteil (15) durch wenigstens ein Sicherungselement (20) im Gehäuse (1) befestigt ist.

4. Entgrateinrichtung mit einem Rohrentgrater nach einem der Ansprüche 1 bis 3,
**dadurch gekennzeichnet, dass** die Entgrateinrichtung für den Rohrentgrater eine Rollenauflage (26 bis 29) aufweist, die mit wenigstens zwei mit Abstand nebeneinander liegenden, frei drehbaren Rollen versehen ist, auf denen der Rohrentgrater mit seiner zylindrischen Außenseite (7) aufliegt, und dass dem Reibelement (4) des Rohrentgraters wenigstens ein drehbar angetriebenes Reibrad (9) zugeordnet ist, das in Reibeingriff mit dem Reibelement (4) gebracht wird, wodurch der Rohrentgrater auf den Rollen aufliegend um seine Achse drehbar angetrieben wird.

5. Entgrateinrichtung nach Anspruch 4,
**dadurch gekennzeichnet, dass** das Reibrad (9) quer zu seiner Drehachse sowie quer zur Drehachse des Rohrentgraters verstellbar ist.

6. Entgrateinrichtung nach Anspruch 4 oder 5,
**dadurch gekennzeichnet, dass** das Reibrad (9) längs eines Ständers (33) verstellbar ist.

7. Entgrateinrichtung nach Anspruch 6,
**dadurch gekennzeichnet, dass** im Ständer (33) eine Gewindespindel (34) untergebracht ist, auf der eine Spindelmutter sitzt, die mit einem Motor/Getriebegehäuse (35) verbunden ist.

8. Entgrateinrichtung nach Anspruch 7,
**dadurch gekennzeichnet, dass** im Motor/Getriebegehäuse (35) ein Motor/Getriebe für das Reibrad (9) vorgesehen ist.

9. Entgrateinrichtung, insbesondere nach einem der Ansprüche 4 bis 8, **dadurch gekennzeichnet, dass** das Reibrad (9) ein Schneidrad zum Durchtrennen des Rohres ist.

10. Entgrateinrichtung nach Anspruch 9,
**dadurch gekennzeichnet, dass** das Schneidrad (9) mit einer Umfangsschneide (38) in die umlaufende Vertiefung (8) des Reibelementes (4) eingreift.

11. Entgrateinrichtung nach einem der Ansprüche 4 bis 10,
**dadurch gekennzeichnet, dass** der Rohrentgrater und das Reibrad (9) zueinander parallele Drehachsen haben.

## Claims

1. Pipe deburrer, in particular for pipes of press fitting systems, with a housing (1) which over at least part of its length has a cylindrical outer side (7) provided with at least one circumferential friction element (4) and which is provided with at least one deburring part (15),
**characterised in that** the friction element (4) is a friction ring fastened to the housing (1) that projects radially inwards over the inner side of the cylinder part (2) having the cylindrical outer side (7), and **in that** the friction element (4) is provided with a circumferential groove-like recess (8) which is located in the radially inwardly projecting friction ring.

2. Pipe deburrer according to claim 1,
**characterised in that** the deburring part (15) is a deburring blade which projects with at least one blade part (17) outwards over the housing (1) and/or inwards over the inner side of the housing (1).

3. Pipe deburrer according to claims 1 or 2,
**characterised in that** the deburring part (15) is fasted in the housing (1) by means of at least one securing element (20).

4. Deburring device with a pipe deburrer according to any one of claims 1 to 3,
**characterised in that** the deburring device has a roller support (26 to 29) for the pipe deburrer which is provided with at least two freely rotatable rollers arranged next to each other at a distance on which the pipe deburrer rests with its cylindrical outer side (7), and **in that** assigned to the friction element (4) of the pipe deburrer is at least one rotatably actuated friction wheel (9) that is brought into frictional contact with the friction element (4) through which the pipe deburrer lying on the rollers is actuated in a rotating manner about its axis.

5. Deburring device according to claim 4,
**characterised in that** the friction wheel (9) is adjustable perpendicularly to its axis of rotation and also perpendicularly to the axis of rotation of the pipe deburrer.

6. Deburring device according to claim 4 or 5,
**characterised in that** the friction wheel (9) is adjustable along a stand (33).

7. Deburring device according to claim 6,
**characterised in that** accommodated in the stand (33) is a threaded spindle (34) on which rests a spindle nut that is connected to a motor/gear housing (35).

8. Deburring device according to claim 7,
characterised that in the motor/gear housing (35) a motor/gear for the friction wheel (9) is provided.

9. Deburring device, more particularly according to any one of claims 4 to 8,
**characterised in that** the friction wheel (9) is a cutting wheel for cutting through the pipe.

10. Deburring device according to claim 9,
**characterised in that** the cutting wheel (9) engages with a circumferential cutting edge (38) in the circumferential recess (8) of the friction element (4) .

11. Deburring device according to any one of claims 4 to 19,
**characterised in that** the pipe deburrer and the friction wheel (9) have axes of rotation that are parallel to each other.

## Revendications

1. Ébavurage de tuyaux, notamment pour tuyaux de systèmes press-fit, comportant un boîtier (1) qui comporte une face extérieure cylindrique (7) pourvue sur au moins une partie de sa longueur d'au moins un élément de frottement (4) périphérique et qui est pourvu d'au moins une pièce d'ébavurage (15),
**caractérisé en ce que** l'élément de frottement (4) est une couronne de frottement fixée au boîtier (1) et qui dépasse radialement vers l'intérieur au-delà de la face intérieure de la pièce cylindrique (2) présentant la face extérieure cylindrique (7), et que l'élément de frottement (4) est pourvu d'un creux périphérique en forme de rainure (8) qui se trouve dans la couronne de frottement dépassant radialement vers l'intérieur.

2. Ébavurage de tuyaux selon la revendication 1,
**caractérisé en ce que** la pièce d'ébavurage (15) est une lame d'ébavurage qui dépasse par au moins une partie de lame (17) vers l'extérieur au-delà du boîtier (1) et/ou vers l'intérieur au-delà de la face intérieure du boîtier (1).

3. Ébavurage de tuyaux selon la revendication 1 ou 2,
**caractérisé en ce que** la pièce d'ébavurage (15) est fixée par au moins un élément de fixation (20) dans le boîtier (1).

4. Dispositif d'ébavurage dote d'un tel ébavurage de tuyaux selon une des revendications 1 à 3,
**caractérisé en ce que** le dispositif d'ébavurage présente pour l'ébavurage de tuyaux un support de rouleaux (26 à 29) qui est pourvu d'au moins deux rouleaux tournant librement et juxtaposés avec un espacement mutuel et sur lesquels l'ébavurage de tuyaux repose par sa face extérieure cylindrique (7), et qu'est associée à l'élément de frottement (4) de l'ébavurage de tuyaux au moins une roue de frottement (9) entraînée en rotation qui est amenée en prise de frottement avec l'élément de frottement (4), ce qui entraîne l'ébavurage de tuyaux reposant sur les rouleaux en rotation autour de son axe.

5. Dispositif d'ébavurage selon la revendication 4,
**caractérisé en ce que** la roue de frottement (9) est réglable transversalement à son axe de rotation et transversalement à l'axe de rotation de l'ébavurage de tuyaux.

6. Dispositif d'ébavurage selon la revendication 4 ou 5,
**caractérisé en ce que** la roue de frottement (9) est réglable le long d'un support (33).

7. Dispositif d'ébavurage selon la revendication 6,
**caractérisé en ce qu'**est disposée dans le support (33) une broche filetée (34) sur laquelle est assis un écrou à broche qui est connecté à un moteur/une boîte de transmission (35).

8. Dispositif d'ébavurage selon la revendication 7,
**caractérisé en ce qu'**un moteur/une boîte de transmission pour la roue de frottement (9) est prévu dans le moteur/la boîte de transmission (35).

9. Dispositif d'ébavurage, en particulier selon une des revendications 4 à 8,
**caractérisé en ce que** la roue de frottement (9) est une roue coupante permettant de sectionner le tuyau.

10. Dispositif d'ébavurage selon la revendication 9,
**caractérisé en ce que** la roue coupante (9) s'engrène par une lame circonférentielle (38) dans le creux périphérique (8) de l'élément de frottement (4).

11. Dispositif d'ébavurage selon une des revendications 4 à 10,
**caractérisé en ce que** l'ébavurage de tuyaux et la roue de frottement (9) ont des axes de rotation mutuellement parallèles.
